# EUROPEAN PATENT APPLICATION

(11) **EP 2 744 244 A1**
(43) Date of publication of application: **18.06.2014**
(21) Application number: 12852113.5
(22) Date of filing: 23.04.2012
(51) Int. Cl.: H04W 4/24, H04W 24/00

(54) **METHOD FOR MANAGING CHARGE SECURITY AND MOBILE TERMINAL**

(30) Priority: 24.11.2011 CN 201110378725
(71) Applicant: ZTE Corporation, Shenzhen, Guangdong 518057 (CN)
(72) Inventor: LEI, Mingjian, Shenzhen Guangdong 518057 (CN); WANG, Wei, Shenzhen Guangdong 518057 (CN); XU, Lifeng, Shenzhen Guangdong 518057 (CN); GU, Youpeng, Shenzhen Guangdong 518057 (CN); ZHONG, Sheng, Shenzhen Guangdong 518057 (CN); HU, Wei, Shenzhen Guangdong 518057 (CN)
(74) Representative: Tischner, Oliver
(86) International application number: PCT/CN2012/074554
(87) International publication number: WO 2013/075458

(57) **Abstract**

The disclosure discloses a method for managing fund security, including that: a fund-security controlling strategy is generated according to a preset fund-security-controlling-strategy configuring file; and permission of using a paid function by an application is controlled according to a strategy controlling permission of using a paid function in the fund-security controlling strategy when it is detected that the application is about to use a paid function defined in the fund-security controlling strategy. The disclosure also provides a mobile terminal. With the disclosure, it is possible to control permission to a malicious application in a mobile terminal to use a paid function in the mobile terminal, thereby prevent loss of fund of the mobile terminal.

## Description

### TECHNICAL FIELD

The disclosure relates to control of permission in a mobile terminal, and in particular to a method for managing fund security and a mobile terminal.

### BACKGROUND

With the arrival of an era of smart mobile terminals such as smart phones, multiple applications may be installed and run on a mobile phone to enhance usability by a mobile phone user.

At present, among applications installed and run on a mobile phone, there is an increasing number of malicious applications implanted with malicious charging virus codes. By running hiding in the background and calling a mobile-fund consuming paid function, such a malicious application uses a fund of the mobile phone of a user without the user realizing it in time. For example, the malicious application may send a service customizing short message to an illegal Service Provider (SP) automatically in the background, or dial a number of an illegal SP silently in the background, such that the fund of the mobile phone may be deducted without the awareness of the user.

It can be seen that due to lack of control over permission to a malicious application in a mobile phone to use a paid function that will lead to fund deduction, the fund of the mobile phone is deducted without the awareness of a user, causing loss of the fund of the mobile phone to the user.

### SUMMARY

In view of the above, it is desired that embodiments of the disclosure provide a method for managing fund security and a mobile terminal, capable of controlling permission to a malicious application in a mobile terminal to use a paid function in the mobile terminal , thereby prevent loss of fund to a mobile user.

To this end, a technical solution of the disclosure is implemented as follows.

The disclosure provides a method for managing fund security, the method including the steps of:
generating a fund-security controlling strategy according to a preset fund-security-controlling-strategy configuring file; and
controlling permission of using a paid function by an application according to a strategy controlling permission of using a paid function in the fund-security controlling strategy when it is detected that the application is about to use a paid function defined in the fund-security controlling strategy.

According to an embodiment, the method may further include: before it is detected that the application is about to use a paid function defined in the fund-security controlling strategy,
determining in real time whether an application currently accessed is to use a paid function; when it is determined that a application currently accessed is to use a paid function, detecting whether permission in using the paid function by the application matches the fund-security controlling strategy; otherwise when it is determined that no application currently accessed is to use a paid function, continuing to determine whether a application currently accessed is to use a paid function.

According to an embodiment, the step of detecting whether permission in using the paid function by the application matches the fund-security controlling strategy may include: looking up, in the fund-security controlling strategy, a paid-function-permission controlling list under a trust level corresponding to a trust level of the application; determining whether the paid function to be used by the application is a paid function to be controlled in the paid-function-permission controlling list, and when it is determined that the paid function to be used by the application is a paid function to be controlled in the paid-function-permission controlling list, it is detected that the application is about to use a paid function defined in the fund-security controlling strategy; otherwise when it is determined that no paid function to be used by the application is a paid function to be controlled in the paid-function-permission controlling list, permitting the application to use the paid function.

According to an embodiment, the method may further include: before the looking up, in the fund-security controlling strategy, a paid-function-permission controlling list under a trust level corresponding to a trust level of the application,
when it is determined that a new application is to be installed, decompressing a package for installing the new application, and extracting signature information of the new application; performing authentication using the signature information of the application, and determining the trust level of the application according to a result of the authentication; and storing the trust level into an attribute configuring file corresponding to the application.

According to an embodiment, the method may further include: before controlling permission of using a paid function by an application according to a strategy controlling permission of using a paid function in the fund-security controlling strategy,
determining whether there is any strategy controlling permission of using the paid function by the application, and when there is a strategy controlling permission of using the paid function by the application, controlling permission of using the paid function by the application according to the strategy controlling permission of using the paid function; otherwise when there is no strategy controlling permission of using the paid function by the application, setting and storing the strategy controlling permission of using the paid function.

The disclosure further provides a mobile terminal, including a usage-permission-strategy module and a usage-permission controlling module, wherein
the usage-permission-strategy module is configured to generate a fund-security controlling strategy according to a preset fund-security-controlling-strategy configuring file, and provide the fund-security controlling strategy to the usage-permission controlling module; and
the usage-permission controlling module is configured to control permission of using a paid function by an application according to a strategy controlling permission of using a paid function in the fund-security controlling strategy when it is detected that the application is about to use a paid function defined in a system-connection-permission controlling strategy in the usage-permission-strategy module.

According to an embodiment, the mobile terminal may further include:
an application processing module configured to determine in real time whether an application currently accessed is to use a paid function; when it is determined that a application currently accessed is to use a paid function, send a name of the paid function to be used by the application to the usage-permission controlling module; otherwise when it is determined that no application currently accessed is to use a paid function, continue to determine whether a application currently accessed is to use a paid function; and
accordingly, the usage-permission controlling module may be specifically configured to receive the name of the paid function to be used by the application sent by the application processing module, and detect whether the paid function is in line with the fund-security controlling strategy.

According to an embodiment, the usage-permission controlling module may be specifically configured to look up, in the fund-security controlling strategy in the usage-permission-strategy module, a paid-function-permission controlling list under a trust level corresponding to a trust level of the application; determine whether the paid function to be used by the application is a paid function to be controlled in the paid-function-permission controlling list, and when it is determined that the paid function to be used by the application is a paid function to be controlled in the paid-function-permission controlling list, it is detected that the application is about to use a paid function defined in the fund-security controlling strategy; otherwise when it is determined that no paid function to be used by the application is a paid function to be controlled in the paid-function-permission controlling list, notify the application processing module to permit the application to use the paid function; and
accordingly, the application processing module may be further configured to permit the application to use the paid function according to received notification of the usage-permission controlling module; and
the usage-permission-strategy module may be specifically configured to provide the fund-security controlling strategy to the usage-permission controlling module.

According to an embodiment, the mobile terminal may further include: an application-trust-level authenticating module configured to receive a package for installing a new application sent by the application processing module, decompress the package for installing the new application and extract signature information of the new application; perform authentication using the signature information of the application, and determine the trust level of the application according to a result of the authentication; and store the trust level into an attribute configuring file corresponding to the application; and
accordingly, the application processing module may be further configured to send the package for installing the new application to the application-trust-level authenticating module when it is determined that the new application is to be installed.

According to an embodiment, the usage-permission controlling module may be specifically configured to determine whether there is any strategy controlling permission of using the paid function by the application, and when there is a strategy controlling permission of using the paid function by the application, control permission of using the paid function by the application according to the strategy controlling permission of using the paid function; otherwise when there is no strategy controlling permission of using the paid function by the application, set the strategy controlling permission of using the paid function, and store the set strategy controlling permission of using the paid function into the usage-permission-strategy module; and
accordingly, the usage-permission-strategy module may be specifically configured to receive the strategy controlling permission of using the paid function sent by the usage-permission controlling module, and store the strategy controlling permission of using the paid function into an item corresponding to the paid function in the paid-function-permission controlling list.

With the method for managing fund security and the mobile terminal provided by the disclosure, by configuring a fund-security controlling strategy aiming at applications with different trust levels, detection is performing focusing on use of a paid function concerned by a user; when any application is to use any paid function in a fund-security controlling strategy of the mobile terminal, processing is performed according to a specific strategy controlling permission of using the paid function; such that use of a paid function by an application of a mobile terminal may be controlled and managed by category according to a trust level of the application, thereby avoiding loss of fund of a mobile user. In addition, the fund-security controlling strategy may be modified or deleted as needed so as to control permission of using a paid function flexibly.

### BRIEF DESCRIPTION OF THE DRAWINGS

Fig. 1 is a flow chart of a method for managing fund security according to the disclosure; and
Fig. 2 is a schematic diagram of a structure of a mobile terminal according to the disclosure.

### DETAILED DESCRIPTION

According to embodiments of the disclosure, a mobile terminal generates a fund-security controlling strategy according to a preset fund-security-controlling-strategy configuring file; and when the mobile terminal detects that an application is about to use a paid function defined in the fund-security controlling strategy, the mobile terminal controls permission of using a paid function by the application according to a strategy controlling permission of using a paid function in the fund-security controlling strategy.

The fund-security controlling strategy is a specific paid function recorded by the mobile terminal among paid functions (which specific paid function is to be controlled under different trust levels) and the strategy controlling permission of using the paid function.

The strategy controlling permission of using a paid function is a way to control permission of using any paid function in the fund-security controlling strategy, and may include that usage permission is always granted, always denied, or inquired about every time.

The disclosure will be further elaborated below with reference to accompanying drawings and specific embodiments.

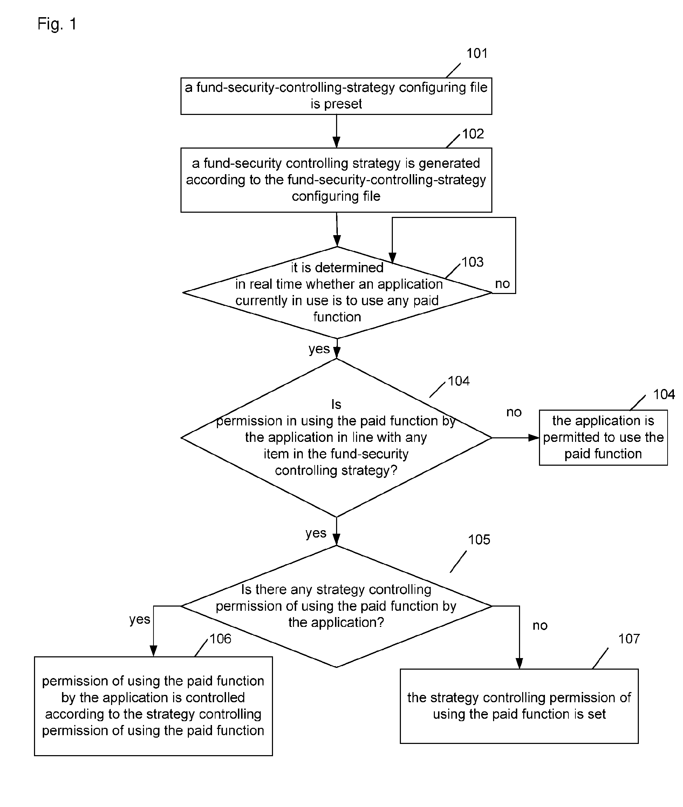

Hereinafter, the mobile terminal may be a mobile phone, for example. A method for managing fund security according to the disclosure, as shown in Fig. 1, includes steps as follows.

At step 101, a fund-security-controlling-strategy configuring file is preset in a mobile phone.

Here, permission of using a function to be controlled, which may include a permission type, a trust level, a name of a permission group, a paid function to be controlled under the permission group, is written as needed in the fund-security-controlling-strategy configuring file in a format which may be an Extensible Markup Language (XML) format.

For example, the fund-security-controlling-strategy configuring file may be written in the following format:

```
     <?xml version='1.0' encoding='utf-8' standalone='yes' ?>
     <sysControlPermission>
        <trustLevel name="unApproved">
        <permissionGroup name=" cost_money" />
               <permission name=" SEND_SMS" />
               <permission name=" CALL_PHONE" />
             <permission name="ACCESS_ INTERNET" />
        < /permissionGroup >
        </trustLevel >
     </sysControlPermission>,
```

wherein <sysControlPermission> represents a permission type of control by system default; <trustLevel name="unApproved"> represents an unApproved trust level; <permissionGroup name=" cost_money " /> represents a name of a permission group of cost_money; <permission name=" SEND_SMS " />, <permission name=" CALL_PHONE" />, and <permission name="ACCESS_ INTERNET" /> respectively represent functions of SMS sending (SEN_SMS), phone-call making (CALL_PHONE), internet accessing (ACCESS_INTERNET) to be controlled under the permission group of cost_money.

At step 102, after the mobile phone is started, a fund-security controlling strategy is generated according to the fund-security-controlling-strategy configuring file.

Specifically, after being started, the mobile phone looks up a new fund-security-controlling-strategy configuring file in a specified directory, if no such new file is found, step 103 is performed immediately;

And if found, the fund-security-controlling-strategy configuring file is read, and a trust level, a name of a permission group and a specific function controlled under the permission group are extracted from the fund-security-controlling-strategy configuring file; the name of the permission group as well as a specific function controlled under the permission group is added into a paid-function-permission controlling list with the trust level being taken as an identification; and finally the paid-function-permission controlling list is stored in a memory of the mobile phone to form the fund-security controlling strategy, then step 103 is performed.

Here, the specified directory is a file directory for storing the fund-security-controlling-strategy configuring file, and may for example be a root directory of a memory card of the mobile phone.

At step 103, it is determined in real time whether an application currently in use is to use any paid function in the mobile phone, and if so, step 104 is performed, otherwise step 103 is performed again.

Specifically, the mobile phone monitors in real time the process of running the application, and determines whether information on calling any paid function is issued during the process of running the application, such that it may be determined whether the application currently in use is to use any paid function in the mobile phone. If the information on calling any paid function is issued, then step 104 is performed, and the paid function to be used is extracted from the information on calling the paid function, otherwise if no information on calling any paid function is issued, step 103 is performed again.

Here, the information on calling any paid function includes the paid function to be called. A method for generating the information on calling any paid function is prior art, and is not repeated here.

At step 104, it is detected whether permission in using the paid function by the application is in line with any item in the fund-security controlling strategy, and if so, step 105 is performed, otherwise the application is permitted to use the paid function, and the processing flow is ended.

Specifically, the mobile phone looks up, in the fund-security controlling strategy, a paid-function-permission controlling list under a trust level corresponding to a trust level of the application; the mobile phone determines whether the paid function to be used by the application is any paid function to be controlled in the paid-function-permission controlling list, and when it is determined that the paid function to be used by the application is a paid function to be controlled in the paid-function-permission controlling list, step 105 is performed; otherwise when it is determined that no paid function to be used by the application is a paid function to be controlled in the paid-function-permission controlling list, the mobile phone permits the application to use the paid function, and the application currently accessed is further processed according to prior art.

For example, when the mobile phone determines that the application currently in use is to use an internet-accessing function, the mobile phone looks up, in the fund-security controlling strategy, the paid-function-permission controlling list under a trust level corresponding to the trust level of the application; step 105 is performed when the trust level of the application is an unApproved trust level, and an item of internet-accessing function is recorded in the paid-function-permission controlling list corresponding to the unApproved trust level; and step 105 is performed when the trust level of the application is an approved trust level, and the item of internet-accessing function is recorded in the paid-function-permission controlling list under the approved trust level.

At step 105, the mobile phone determines whether there is any strategy controlling permission of using the paid function by the application, and if there is, step 106 is performed, otherwise if there is none step 107 is performed.

At step 106, the mobile phone controls permission of using the paid function by the application according to the strategy controlling permission of using the paid function, and ends the processing flow.

Here, the mobile phone controls permission of using the paid function by the application as follows. The mobile phone looks up a specific setting in the strategy controlling permission of using the paid function; permits the application to use the paid function, and further operates the application according to prior art when the specific setting is that usage permission is always granted; the mobile phone denies using the paid function by the application and further operates the application according to prior art when the specific setting is that usage permission is always denied; and when the specific setting is that usage permission is inquired about every time, the mobile phone pops up a check box for a user to make a choice whether to permit the application to use the paid function, permits or denies usage of the paid function by the application according to the choice of the user, then further operates the application according to prior art.

At step 107, the mobile phone sets the strategy controlling permission of using the paid function.

Specifically, the mobile phone pops up a dialog box to prompt a user to set the strategy controlling permission of using the paid function as always granted, always denied, or inquired about every time while suspending the flow of processing a current application; the mobile phone stores the setting by the user as the strategy controlling permission of using the paid function, and adds the permission of using the paid function into an item corresponding to the paid function in the fund-security controlling strategy, and the mobile phone further processes the current application according to the set strategy controlling permission of using the paid function.

In addition, before the step 103, a trust level of an application is required to be authenticated, wherein a specific process of the authentication includes steps as follows.

At step a, a mobile phone determines in real time whether an operation chosen by a user is to install any new application or to use any application, if the choice is to install any new application, then a step b is performed; and if the choice is to access any application, then step 103 is performed.

At step b, the mobile phone decompresses a package for installing the new application and extracts signature information of the application.

Here, the mobile phone may decompress the package for installing the new application using prior art, which is not repeated here.

The mobile phone may extract the signature information of the new application by extracting the signature information from the decompressed package for installing the new application.

The signature information is written into a specific field of the application using a special tool, to indicate that the application has been approved by a signer, wherein the specific field may include a signature for a Symbian paid certificate, a signature for a public free certificate used by an author, and a signature of a user.

At step c, the mobile phone first performs authentication using the signature information of the application, determines a trust level of the application according to a result of the authentication; stores the trust level into an attribute configuring file corresponding to the application, and continues to install the application according to prior art; then the flow returns to step a.

Here, the mobile phone may perform authentication using the signature information of the application by matching the signature information of the application with signature information of multiple certificates preset in the mobile phone, and if the signature information of the application is the same as the signature information of any of the certificates, then the application passes the authentication, otherwise the application fails to pass the authentication.

The step of determining the trust level of an application according to the result of the authentication includes that: if the application passes the authentication, then an approved trust level with which the application may be trusted is set according to the specific signature information; if the application fails to pass the authentication, then the application is set with an unApproved trust level indicating that the application is not trustworthy.

The trust level may include two broad categories, namely, the unApproved and the approved.

An approved trust level with which the application may be trusted may be set according to the specific signature information by customizing signature information in a preset certificate by a mobile-phone manufacturer as needed. An approved trust level corresponding to distinct signature information may include that of an application "trusted by a manufacturer", "trusted by an operator", "trusted by a third-party partner", etc.

In addition, before the step 102 is performed, the fund-security controlling strategy may be modified or deleted as needed, specifically by looking up, when any item in the fund-security controlling strategy needs to be modified or deleted, an original fund-security-controlling-strategy configuring file, and making specific modification in the fund-security-controlling-strategy configuring file.

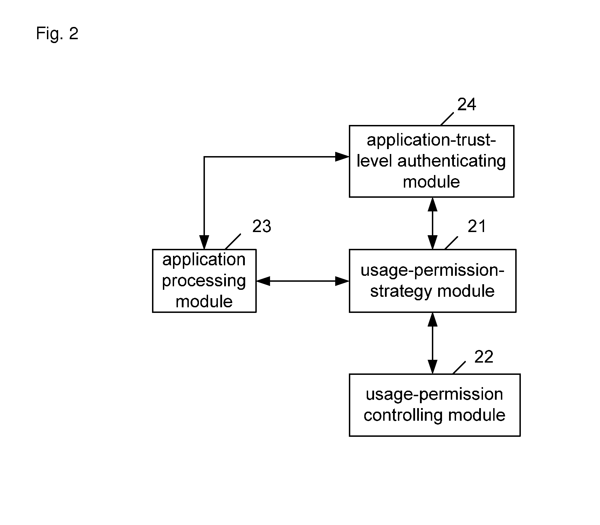

The disclosure further provides a mobile terminal as shown in Fig. 2, the mobile terminal including a usage-permission-strategy module 21 and a usage-permission controlling module 22.

The usage-permission-strategy module 21 is configured to generate a fund-security controlling strategy according to a preset fund-security-controlling-strategy configuring file, and provide the fund-security controlling strategy to the usage-permission controlling module.

The usage-permission controlling module 22 is configured to control permission of using a paid function by an application according to a strategy controlling permission of using the paid function in the fund-security controlling strategy when it is detected that the application is about to use a paid function defined in the fund-security controlling strategy in the usage-permission-strategy module 21.

The usage-permission-strategy module 21 is specifically configured to store the preset fund-security-controlling-strategy configuring file; and after the mobile terminal is started, generate a system-connection-permission controlling strategy according to the fund-security-controlling-strategy configuring file.

The usage-permission-strategy module 21 is specifically configured to look up a new fund-security-controlling-strategy configuring file in a specified directory, and end the processing flow if no such new file is found; otherwise if such a new file is found, read the fund-security-controlling-strategy configuring file, and extract, from the fund-security-controlling-strategy configuring file, a trust level, a name of a permission group and a specific function controlled under the permission group; add the name of the permission group as well as a specific function controlled under the permission group into a paid-function-permission controlling list by taking the trust level as an identification; and finally store the paid-function-permission controlling list to form the fund-security controlling strategy.

The mobile terminal further includes an application processing module 23 configured to: determine in real time whether an application currently accessed is to use any paid function, and when it is determined that a application currently accessed is to use a paid function, send a name of the paid function to be used by the application to the usage-permission controlling module 22, otherwise when it is determined that no application currently accessed is to use a paid function, continue to determine whether a application currently accessed is to use a paid function; and accordingly, the usage-permission controlling module 22 is specifically configured to receive the name of the paid function to be used by the application sent by the application processing module 23, and detect whether the paid function matches any item in the fund-security controlling strategy.

The application processing module 23 is specifically configured to monitor in real time the process of running the application, and determine whether information on calling any paid function is issued during the process of running the application, so as to determine whether the application currently in use is to use any paid function; if the information on calling any paid function is issued, then send the name of the paid function to be used by the application to the usage-permission controlling module 22, otherwise if no information on calling any paid function is issued, continue to determine whether a application currently accessed is to use any paid function.

The usage-permission controlling module 22 is specifically configured to, when it is detected that the paid function matches any item in the fund-security controlling strategy, look up, in the fund-security controlling strategy in the usage-permission-strategy module 21, a paid-function-permission controlling list under a trust level corresponding to a trust level of the application; determine whether the paid function to be used by the application is any paid function to be controlled in the paid-function-permission controlling list, and when it is determined that the paid function to be used by the application is a paid function to be controlled in the paid-function-permission controlling list, determine whether there is any strategy controlling permission of using the paid function by the application; otherwise when it is determined that no paid function to be used by the application is a paid function to be controlled in the paid-function-permission controlling list, notify the application processing module 23 to permit the application to use the paid function.

Accordingly, the application processing module 23 is further configured to receive a notification sent by the usage-permission controlling module 22 to permit the application to use the paid function, then further process the application currently accessed according to prior art.

The usage-permission controlling module 22 is specifically configured to, when there is a strategy controlling permission of using the paid function by the application, control permission of using the paid function by the application according to the strategy controlling permission of using the paid function by the application looked up in the fund-security controlling strategy of the usage-permission-strategy module 21, and end the flow of operation; otherwise when there is no strategy controlling permission of using the paid function by the application, set the strategy controlling permission of using the paid function, and store the set strategy controlling permission of using the paid function into the usage-permission-strategy module 21.

Accordingly, the usage-permission-strategy module 21 is specifically configured to receive the strategy controlling permission of using the paid function sent by the usage-permission controlling module, and store the strategy controlling permission of using the paid function into an item corresponding to the paid function in the paid-function-permission controlling list.

The usage-permission controlling module 22 specifically configured to look up the specific setting in the strategy controlling permission of using the paid function; permit the application to use the paid function, and further operate the application according to prior art when the specific setting is that usage permission is always granted; deny using the paid function by the application and further operate the application according to prior art when the specific setting is that usage permission is always denied; and when the specific setting is that usage permission is inquired about every time, pop up a check box for a user to make a choice whether to permit the application to use the paid function, permit or deny usage of the paid function by the application according to the choice of the user, then further operate the application according to prior art.

The usage-permission controlling module 22 is further configured to prompt a user to set the strategy controlling permission of using the paid function while suspending the flow of processing a current application; receive the strategy controlling permission of using the paid function set by the user, and control permission of using the paid function by the current application according to the set strategy controlling permission of using the paid function.

The mobile terminal further includes an application-trust-level authenticating module 24 configured to receive a package for installing an application sent by the application processing module 23; accordingly, the application processing module 23 is further configured to determine in real time whether an operation chosen by the user is to install any new application or to access any application, if the chosen operation is to install any new application, then send the package for installing the application to the application-trust-level authenticating module 24, otherwise if the chosen operation is to access any application, then determine whether the application currently accessed is to use any paid function.

The application-trust-level authenticating module 24 is further configured to decompress the package for installing the new application and extract signature information of the new application; authenticate the application using the signature information of the application, and determine the trust level of the application according to a result of the authentication; and store the trust level into an attribute configuring file corresponding to the application, and send the decompressed package for installing the new application and the attribute configuring file of the application back to the application processing module 23; accordingly, the application processing module 23 is further configured to receive the decompressed package for installing the new application and the attribute configuring file of the application sent by the application-trust-level authenticating module 24, and then continue to install the decompressed application according to prior art.

The application-trust-level authenticating module 24 is specifically configured to match the signature information of the application with signature information of multiple certificates preset in the module, and if the signature information of the application is the same as the signature information of any of the certificates, then the application passes the authentication, otherwise the application fails to pass the authentication.

The application-trust-level authenticating module 24 is specifically configured to set an approved trust level with which the application may be trusted according to the specific signature information if the application passes the authentication; otherwise if the application fails to pass the authentication, set an unApproved trust level for the application, indicating that the application is not trustworthy.

It may be seen that with an aforementioned solution, use of a paid function by an application of a mobile terminal may be controlled and managed by category according to a trust level of the application, such that use of a paid function of the mobile terminal by a malicious software may be prevented effectively, thereby ensuring security of information data of a user at the mobile terminal.

Described are merely embodiments of the disclosure, which should not be used to limit the scope of the disclosure.

## Claims

1. A method for managing fund security, comprising:
generating a fund-security controlling strategy according to a preset fund-security-controlling-strategy configuring file; and
controlling permission of using a paid function by an application according to a strategy controlling permission of using a paid function in the fund-security controlling strategy when it is detected that the application is about to use a paid function defined in the fund-security controlling strategy.

2. The method according to claim 1, further comprising: before it is detected that the application is about to use a paid function defined in the fund-security controlling strategy, determining in real time whether an application currently accessed is to use a paid function; when it is determined that a application currently accessed is to use a paid function, detecting whether permission in using the paid function by the application matches the fund-security controlling strategy; otherwise when it is determined that no application currently accessed is to use a paid function, continuing to determine whether a application currently accessed is to use a paid function.

3. The method according to claim 2, wherein the step of detecting whether permission in using the paid function by the application matches the fund-security controlling strategy comprises: looking up, in the fund-security controlling strategy, a paid-function-permission controlling list under a trust level corresponding to a trust level of the application; determining whether the paid function to be used by the application is a paid function to be controlled in the paid-function-permission controlling list, and when it is determined that the paid function to be used by the application is a paid function to be controlled in the paid-function-permission controlling list, it is detected that the application is about to use a paid function defined in the fund-security controlling strategy; otherwise when it is determined that no paid function to be used by the application is a paid function to be controlled in the paid-function-permission controlling list, permitting the application to use the paid function.

4. The method according to claim 3, further comprising: before the looking up, in the fund-security controlling strategy, a paid-function-permission controlling list under a trust level corresponding to a trust level of the application, when it is determined that a new application is to be installed, decompressing a package for installing the new application, and extracting signature information of the new application; performing authentication using the signature information of the application, and determining the trust level of the application according to a result of the authentication; and storing the trust level into an attribute configuring file corresponding to the application.

5. The method according to claim 1, further comprising: before controlling permission of using a paid function by an application according to a strategy controlling permission of using a paid function in the fund-security controlling strategy, determining whether there is any strategy controlling permission of using the paid function by the application, and when there is a strategy controlling permission of using the paid function by the application, controlling permission of using the paid function by the application according to the strategy controlling permission of using the paid function; otherwise when there is no strategy controlling permission of using the paid function by the application, setting and storing the strategy controlling permission of using the paid function.

6. A mobile terminal, comprising a usage-permission-strategy module and a usage-permission controlling module, wherein the usage-permission-strategy module is configured to generate a fund-security controlling strategy according to a preset fund-security-controlling-strategy configuring file, and provide the fund-security controlling strategy to the usage-permission controlling module; and the usage-permission controlling module is configured to control permission of using a paid function by an application according to a strategy controlling permission of using a paid function in the fund-security controlling strategy when it is detected that the application is about to use a paid function defined in a system-connection-permission controlling strategy in the usage-permission-strategy module.

7. The mobile terminal according to claim 6, further comprising:
an application processing module configured to determine in real time whether an application currently accessed is to use a paid function; when it is determined that a application currently accessed is to use a paid function, send a name of the paid function to be used by the application to the usage-permission controlling module; otherwise when it is determined that no application currently accessed is to use a paid function, continue to determine whether a application currently accessed is to use a paid function; and
the usage-permission controlling module is configured to receive the name of the paid function to be used by the application sent by the application processing module, and detect whether the paid function is in line with the fund-security controlling strategy.

8. The mobile terminal according to claim 6, wherein the usage-permission controlling module is configured to look up, in the fund-security controlling strategy in the usage-permission-strategy module, a paid-function-permission controlling list under a trust level corresponding to a trust level of the application; determine whether the paid function to be used by the application is a paid function to be controlled in the paid-function-permission controlling list, and when it is determined that the paid function to be used by the application is a paid function to be controlled in the paid-function-permission controlling list, it is detected that the application is about to use a paid function defined in the fund-security controlling strategy; otherwise when it is determined that no paid function to be used by the application is a paid function to be controlled in the paid-function-permission controlling list, notify the application processing module to permit the application to use the paid function; and the application processing module is further configured to permit the application to use the paid function according to received notification of the usage-permission controlling module; and the usage-permission-strategy module is configured to provide the fund-security controlling strategy to the usage-permission controlling module.

9. The mobile terminal according to claim 8, further comprising: an application-trust-level authenticating module configured to receive a package for installing a new application sent by the application processing module, decompress the package for installing the new application and extract signature information of the new application; perform authentication using the signature information of the application, and determine the trust level of the application according to a result of the authentication; and store the trust level into an attribute configuring file corresponding to the application; and the application processing module is further configured to send the package for installing the new application to the application-trust-level authenticating module when it is determined that the new application is to be installed.

10. The mobile terminal according to claim 9, wherein the usage-permission controlling module is configured to determine whether there is any strategy controlling permission of using the paid function by the application, and when there is a strategy controlling permission of using the paid function by the application, control permission of using the paid function by the application according to the strategy controlling permission of using the paid function; otherwise when there is no strategy controlling permission of using the paid function by the application, set the strategy controlling permission of using the paid function, and store the set strategy controlling permission of using the paid function into the usage-permission-strategy module; and the usage-permission-strategy module is configured to receive the strategy controlling permission of using the paid function sent by the usage-permission controlling module, and store the strategy controlling permission of using the paid function into an item corresponding to the paid function in the paid-function-permission controlling list.
